**Europäisches Patentamt**

**European Patent Office**

**Office européen des brevets**

(19)

(11) Veröffentlichungsnummer : **0 122 429**
**B1**

(12) **EUROPÄISCHE PATENTSCHRIFT**

(45) Veröffentlichungstag der Patentschrift :
30.09.87

(51) Int. Cl.⁴ : **B 32 B 15/01**, G 01 K 5/48,
C 22 F 1/08

(21) Anmeldenummer : **84102430.0**

(22) Anmeldetag : **07.03.84**

(54) **Verbundwerkstoff in Stab-, Rohr-, Band-, Blech- oder Plattenform mit reversiblen thermo-mechanischen Eigenschaften und Verfahren zu dessen Herstellung.**

(30) Priorität : 14.03.83 CH 1383/83

(43) Veröffentlichungstag der Anmeldung :
24.10.84 Patentblatt.84/43

(45) Bekanntmachung des Hinweises auf die Patenterteilung : 30.09.87 Patentblatt 87/40

(84) Benannte Vertragsstaaten :
CH DE FR GB LI

(56) Entgegenhaltungen :
EP-A- 0 086 013
GB-A- 2 065 882
US-A- 3 483 748
US-A- 3 748 108

(73) Patentinhaber : BBC Brown Boveri AG
CH-5401 Baden (CH)

(72) Erfinder : Albrecht, Joachim, Dr.
Mitteldorfweg 206
CH-5243 Mülligen (CH)
Erfinder : Duerig, Thomas, Dr.
41681 Mission Creek Dr.
Fremont CA 94539 (US)

EP 0 122 429 B1

## Beschreibung

Die Erfindung geht aus von der Verwendung eines Verbundwerkstoffs nach der Gattung des Oberbegriffs des Anspruchs 1 und einem Verfahren zu dessen Herstellung nach der Gattung des Oberbegriffs des Anspruchs 13.

Unter die Werkstoffe, welche sich durch spezielle, vom normalen Verhalten abweichende thermisch-mechanische Eigenschaften auszeichnen, fallen die sogenannten Gedächtnislegierungen. Dazu gehören unter anderem die Legierungen auf Ni/Ti-Basis und die Cu-Legierungen des sogenannten β-Messingtyps, um nur die wichtigsten zu nennen. Ihre Zusammensetzungen, Eigenschaften und Verwendungen sind aus zahlreichen Veröffentlichungen bekannt (Walter S. Owen, Shape memory effects and applications : An overview, shape memory effects in alloys, edited by Jeff Perkins, 1975, Plenum Press New York, Proc. of int. Symposium on shape memory effects and applications, Toronto, Canada, 19.- 22.5.1975).

Diese Formgedächtnislegierungen zeichnen sich dadurch aus, dass ihre Phasenumwandlung (Uebergang vom martensitischen in den austenitischen Gefügezustand und umgekehrt) im allgemeinen innerhalb eines kleinen Temperaturintervalls von grössenordnungsmässig 30 °C stattfindet. Das gilt sinngemäss auch für die mit der Umwandlung verbundenen reversiblen Formänderungen, ganz gleich welcher Art und Grösse diese sind.

Mit einer einzigen Formgedächtnislegierung lassen sich im allgemeinen keine beliebigen Temperaturen der Formänderung verwirklichen. Auch sind ihre thermo-mechanischen Eigenschaften auf eine einzige Verformungsart bzw. einen einzigen Bewegungsmodus im Umwandlungsbereich beschränkt. Es besteht daher ein grosses Bedürfnis nach Werkstoffen, welche sowohl in thermischer wie in mechanischer Hinsicht dem Konstrukteur grössere Freiheiten erlauben.

Der Erfindung liegt die Aufgabe zugrunde, die Verwendung eines Werkstoffs sowie ein Herstellungsverfahren anzugeben, bei welchem die Formänderungen bei unterschiedlichen Temperaturen erfolgen oder grössere Formänderungen und-/oder mehrere Formänderungsarten und -Grade möglich sind. Der Werkstoff soll auf einfache Weise in Stab-, Rohr-, Band-, Blech- oder Plattenform zur Verfügung gestellt werden können.

Diese Aufgabe wird durch die im kennzeichnenden Teil des Anspruchs 1 und des Anspruchs 13 angegebenen Merkmale gelöst.

Die Erfindung wird anhand der nachfolgenden, durch Figuren näher erläuterten Ausführungsbeispiele beschrieben.

Dabei zeigt :

Figur 1 einen Verbundwerkstoff bestehend aus zwei Formgedächtnislegierungen in gerader Bandform in Grundzustand in der Ausgangslage,

Figur 2 den Verbundwerkstoff gemäss Fig. 1 nach Aufbringen der äusseren Belastung im Tieftemperaturbereich,

Figur 3 den Verbundwerkstoff gemäss Fig. 1 während des Durchlaufens der Umwandlung im Hochtemperaturbereich der ersten Formgedächtnislegierung,

Figur 4 den Verbundwerkstoff gemäss Fig. 1 während des Durchlaufens der Umwandlung im Hochtemperaturbereich der zweiten Formgedächtnislegierung,

Figur 5 einen Verbundwerkstoff bestehend aus zwei Formgedächtnislegierungen in hochkant gebogener Rechteckstabform im Grundzustand in der Ausgangslage,

Figur 6 den Verbundwerkstoff gemäss Fig. 5 nach Aufbringen der äusseren Belastung im Tieftemperaturbereich,

Figur 7 einen Verbundwerkstoff bestehend aus zwei Formgedächtnislegierungen in hochkant gebogener Trapezstabform im Grundzustand in der Ausgangslage,

Figur 8 den Verbundwerkstoff gemäss Fig. 7 nach Aufbringen der äusseren Belastung im Tieftemperaturbereich,

Figur 9 einen Verbundwerkstoff bestehend aus zwei geraden Bändern einer ersten Formgedächtnislegierung und einem dazwischenliegenden geraden Stab einer zweiten Formgedächtnislegierung im Grundzustand in der Ausgangslage,

Figur 10 einen Verbundwerkstoff bestehend aus drei Formgedächtnislegierungen in gerader Band- bzw. Stabform im Grundzustand in der Ausgangslage,

Figur 11 einen Verbundwerkstoff bestehend aus zwei Formgedächtnislegierungen in Rundstabform für Biegebeanspruchung im Grundzustand in der Ausgangslage,

Figur 12 einen Verbundwerkstoff bestehend aus zwei Formgedächtnislegierungen in Rundstabform für Zugbeanspruchung nach Aufbringen der äusseren Belastung im Tieftemperaturbereich,

Figur 13 einen Verbundwerkstoff bestehend aus zwei Formgedächtnislegierungen in Rundstabform für Druckbeanspruchung nach Aufbringen der äusseren Belastung im Tieftemperaturbereich,

Figur 14 einen Verbundwerkstoff bestehend aus zwei Formgedächtnislegierungen in Rundstabform für Zug/Druck-Beanspruchung, nach Aufbringen der äusseren Belastung im Tieftemperaturbereich, im Zustand vor dem Zusammenfügen der einzelnen Teile, perspektivische Darstellung,

Figur 15 den Verbundwerkstoff gemäss Fig. 14 in Ansicht bzw. Schnitt,

Figur 16 den Verbundwerkstoff gemäss Fig. 15 nach dem Zusammenfügen der einzelnen Teile, in der Ausgangslage,

Figur 17 den Verbundwerkstoff gemäss Fig. 16 während des Durchlaufens der Umwandlung im Hochtemperaturbereich der ersten Formgedächtnislegierung,

Figur 18 den Verbundwerstoff gemäss Fig. 16 während des Durchlaufens der Umwandlung im Hochtemperaturbereich der zweiten Formgedächtnislegierung,

Figur 19 einen Verbundwerkstoff bestehend aus zwei Formgedächtnislegierungen in Blech- oder Plattenform für Biegebeanspruchung im Raume, nach Aufbringen der äusseren Beladung im Tieftemperaturbereich, im Zustand vor dem Zusammenfügen der einzelnen Teile,

Figur 20 den Verbundwerkstoff gemäss Fig. 19 nach dem Zusammenfügen der einzelnen Teile, in der Ausgangslage,

Figur 21 den Verbundwerkstoff gemäss Fig. 20 während des Durchlaufens der Umwandlung im Hochtemperaturbereich der ersten Formgedächtnislegierung,

Figur 22 den Verbundwerkstoff gemäss Fig. 20 während des Durchlaufens der Umwandlung im Hochtemperaturbereich der zweiten Formgedächtnislegierung,

Figur 23 einen Verbundwerkstoff bestehend aus zwei Formgedächtnislegierungen in Rundstabform für Zug/Torsions-Beanspruchung, nach Aufbringen der äusseren Belastung im Tieftemperaturbereich, im Zustand vor dem Zusammenfügen der einzelnen Teile, perspektivische Darstellung,

Figur 24 den Verbundwerkstoff gemäss Fig. 23 in Ansicht bzw. Schnitt,

Figur 25 den Verbundwerkstoff gemäss Fig. 23 nach dem Zusammenfügen der einzelnen Teile, in der Ausgangslage,

Figur 26 den Verbundwerkstoff gemäss Fig. 25 während des Durchlaufens der Umwandlung im Hochtemperaturbereich der ersten Formgedächtnislegierung,

Figur 27 den Verbundwerkstoff gemäss Fig. 25 während des Durchlaufens der Umwandlung im Hochtemperaturbereich der zweiten Formgedächtnislegierung.

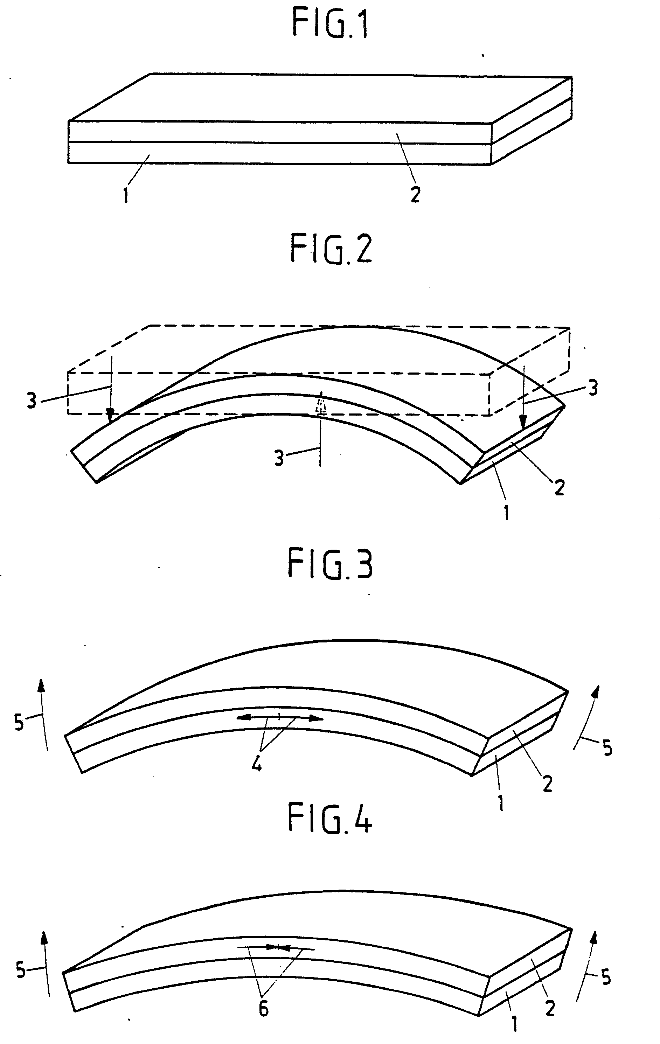

In Fig. 1 ist ein Verbundwerkstoff bestehend aus zwei Formgedächtnislegierungen in gerader Bandform perspektivisch dargestellt. 1 stellt eine Formgedächtnislegierung A, 2 eine Formgedächtnislegierung B dar. A und B haben im allgemeinen unterschiedliche Umwandlungstemperaturen (Punkte $A_S$ bzw. $A_F$). 1 und 2 sind miteinander z. B. durch Walzen (Walzplattieren) fest verbunden. Die Figur zeigt den Werkstoff im Grundzustand in der Ausgangslage, d. h., vor der Induzierung des Zweiweg-Effekts. Dies entspricht geometrisch gleichzeitig der Lage nach der thermischen Behandlung (Lösungsglühen und Abschrecken).

Fig. 2 zeigt den Verbundwerkstoff gemäss Fig. 1 während bzw. nach Aufbringen der äusseren Belastung im Tieftemperaturbereich zwecks Induzierung des Zweiweg-Effekts. Im vorliegenden Fall handelt es sich um eine Biegeverformung. Die Richtung der aufgedrückten äusseren Belastung ist durch die Pfeile 3 hervorgehoben. Die übrigen Bezugszeichen entsprechen denjenigen der Fig. 1.

Fig. 3 zeigt den Verbundwerkstoff gemäss Fig. 1 während des Durchlaufens der Umwandlung im Hochtemperaturbereich der ersten Formgedächtnislegierung, in diesem Falle der Legierung A. 1 dehnt sich aus, was durch den Doppelpfeil 4 angedeutet ist. 2 macht vorerst keine innere Strukturveränderung mit, sondern dient lediglich dem mechanischen Gleichgewicht. Durch die Ausdehnung von 1 in Richtung 4 streckt sich der Werkstoff und seine Enden führen eine äussere Bewegung in Richtung 5 aus.

In Fig. 4 ist der Verbundwerkstoff gemäss Fig. 1 während des Durchlaufens der Umwandlung im Hochtemperaturbereich der zweiten Formgedächtnislegierung dargestellt. Die Legierung B erreicht die Umwandlungstemperatur, wobei 2 sich zusammenzieht. Dies ist durch den Doppelpfeil 6 angedeutet. Der Werkstoff führt eine weitere äussere Bewegung gemäss Richtung 5 aus und wird zunehmend flacher.

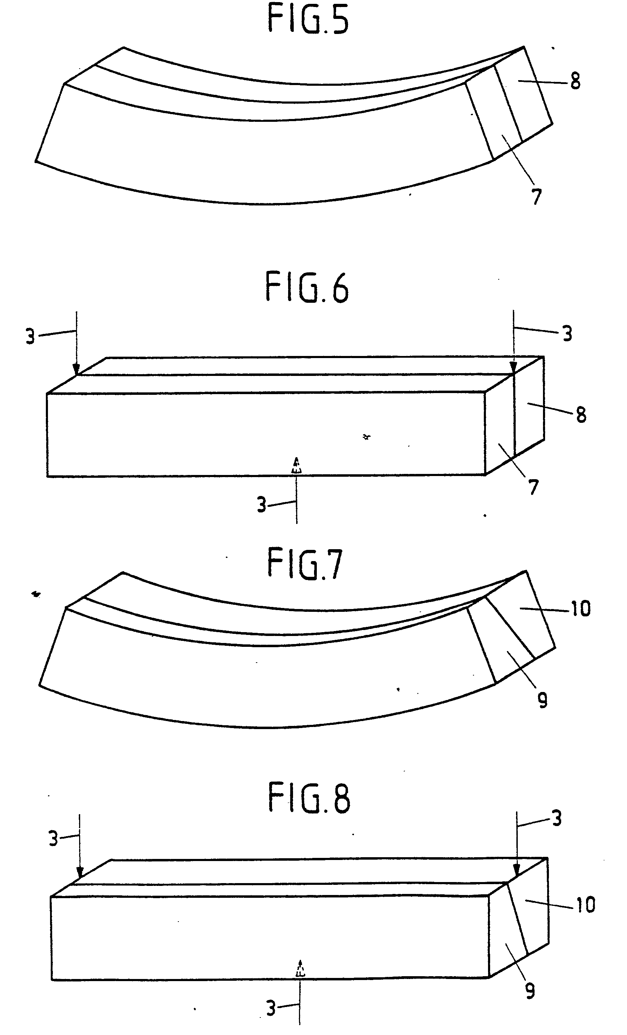

Fig. 5 stellt einen Verbundwerkstoff bestehend aus zwei Formgedächtnislegierungen dar, welche im Grundzustand und in der Ausgangslage gebogen sind. 7 bezieht sich auf eine Formgedächtnislegierung A, 8 auf eine solche B in hochkant gebogener Rechteckstabform. Im übrigen gelten die unter Fig. 1 erläuterten Voraussetzungen. Das Verbinden von 7 und 8 durch Walzen, Schweissen, Löten oder Fügen kann vor oder nach dem Biegen erfolgen.

Fig. 6 zeigt den Verbundwerkstoff gemäss Fig. 5 nach Aufbringen der äusseren Belastung im Tieftemperaturbereich zwecks Induzierung des Zweiweg-Effekts. Dieser Zustand entspricht demjenigen der Fig. 2. Die Bezugszeichen entsprechen den Figuren 5 bzw. 2.

In Fig. 7 ist ein Verbundwerkstoff bestehend aus zwei Formgedächtnislegierungen A und B in Form hochkant gebogener Trapezprofile 9 und 10 dargestellt. Derartige, bezüglich der Hauptachsen asymmetrische Profile können herangezogen werden, wenn räumliche Bewegungen erzielt werden sollen.

Fig. 8 zeigt den Verbundwerkstoff gemäss Fig. 7 nach Aufbringen der äusseren Belastung im Tieftemperaturbereich. Im übrigen entspricht diese Figur der Fig. 6.

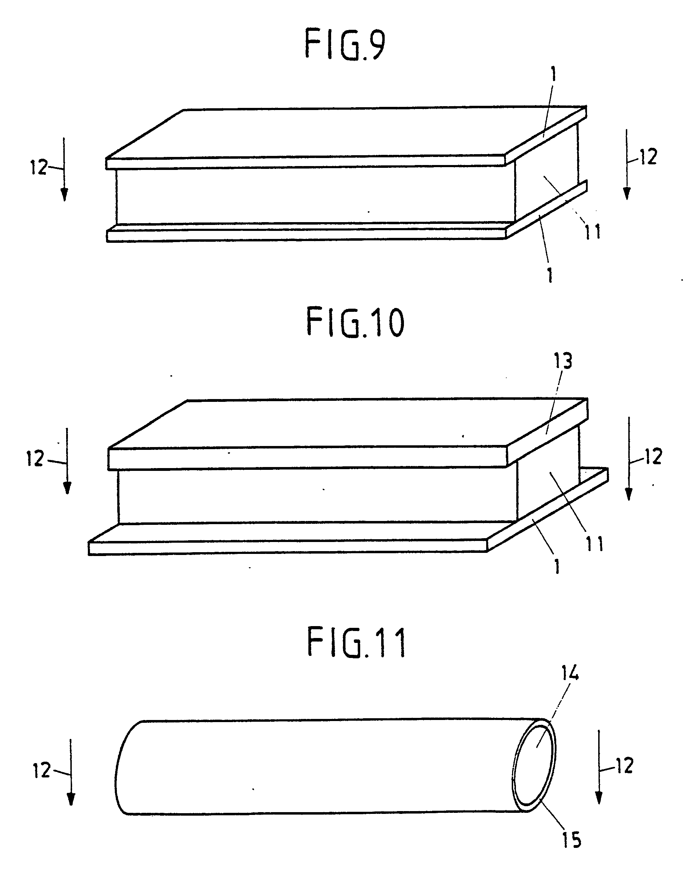

Fig. 9 zeigt einen Verbundwerkstoff bestehend aus zwei geraden Bändern 1 einer ersten Formgedächtnislegierung A und einem dazwischenliegenden geraden Stab 11 einer zweiten Formgedächtnislegierung B im Grundzustand und in der Ausgangslage. Die Formgedächtnislegierung B ist hier als Stab 11 von geringerer Breite als die Bänder 1 ausgeführt. Selbstverständlich könnte auch das Umgekehrte der Fall sein oder 1 und 11 könnten gleiche Breite haben. 12 deutet die Richtung der zur Verformung im Tieftemperaturbereich benötigten äusseren Belastung an. Im vorliegenden Fall des Biegestabes ist dies im allgemeinen ein Biegemoment.

Fig. 10 zeigt einen Verbundwerkstoff bestehend aus drei Formgedächtnislegierungen in gerader Band- bzw. Stabform im Grundzustand in Ausgangslage. 1 und 11 entsprechen Fig. 9, während 13 eine Formgedächtnislegierung C in Bandform darstellt. Die übrigen Bezugszeichen und Voraussetzungen entsprechen denjenigen der Fig. 9.

In Fig. 11 ist ein Verbundwerkstoff bestehend aus zwei Formgedächtnislegierungen in Rundstabform für Biegebeanspruchung im Grundzustand und in der Ausgangslage dargestellt. 14 ist eine Formgedächtnislegierung A in Zylinderform, während 15 eine ebensolche B in Hohlzylinderform bedeutet.

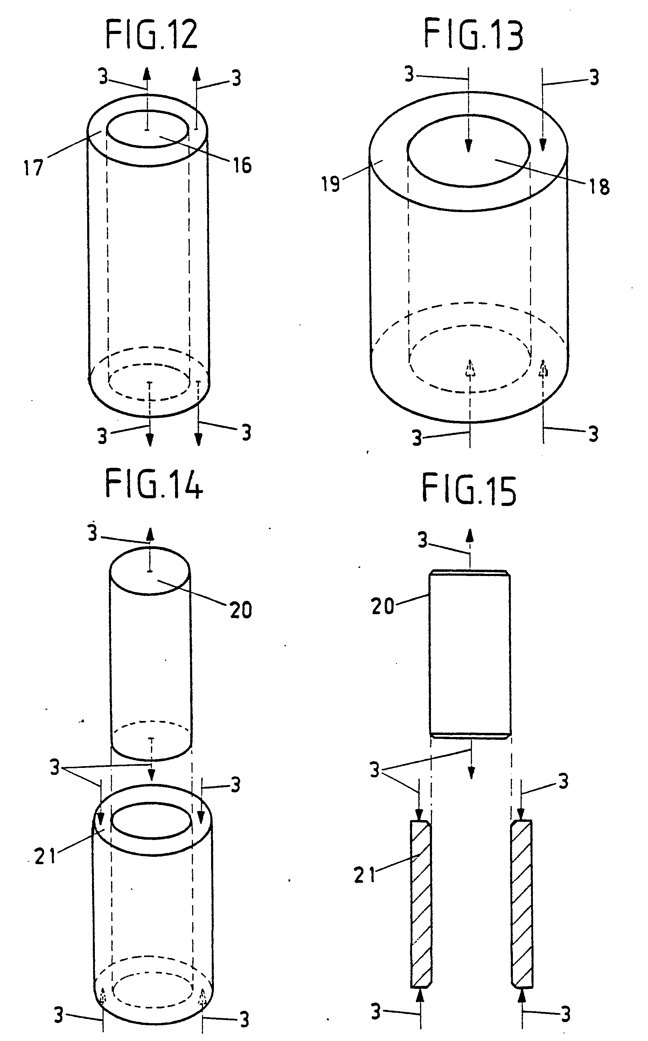

In Fig. 12 wird ein Verbundwerkstoff bestehend aus zwei Formgedächtnislegierungen in Rundstabform für Zugbeanspruchung gezeigt. Die Figur erläutert das Aufbringen der äusseren Belastung im Tieftemperaturbereich durch die Pfeile 3. 16 ist die Formgedächtnislegierung A in Zylinderform, 17 die Formgedächtnislegierung B in Hohlzylinderform. Die Verbindung zwischen 16 und 17 kann durch Strangpressen oder auf pulvermetallurgische Weise erfolgen.

Fig. 13 zeigt einen Verbundwerkstoff bestehend aus zwei Formgedächtnislegierungen in Rundstabform für Druckbeanspruchung nach Aufbringen der äusseren Belastung im Tieftemperaturbereich. 18 und 19 bedeuten die Formgedächtnislegierungen A bzw. B in Zylinder- bzw. Hohlzylinderform. 3 stellt wieder die Richtung der aufgedrückten äusseren Belastung dar.

Fig. 14 stellt einen Verbundwerkstoff bestehend aus zwei Formgedächtnislegierungen in Rundstabform für Zug/Druck-Beanspruchung dar. Die perspektivische Darstellung zeigt den Zustand nach Aufbringen der äusseren Belastung im Tieftemperaturbereich und vor dem Zusammenfügen der einzelnen Teile. 20 bedeutet eine Formgedächtnislegierung A in Zylinder-, 21 eine Formgedächtnislegierung B in Hohlzylinderform. 3 markiert die Belastungsrichtung.

Fig. 15 zeigt den Verbundwerkstoff gemäss Fig. 14 in Ansicht bzw. Schnitt. Die entsprechenden stirnseitigen Kanten von 20 und 21 sind zwecks Vorbereitung der Schweissnaht gebrochen. Die Bezugszeichen entsprechen genau denjenigen der Fig. 14.

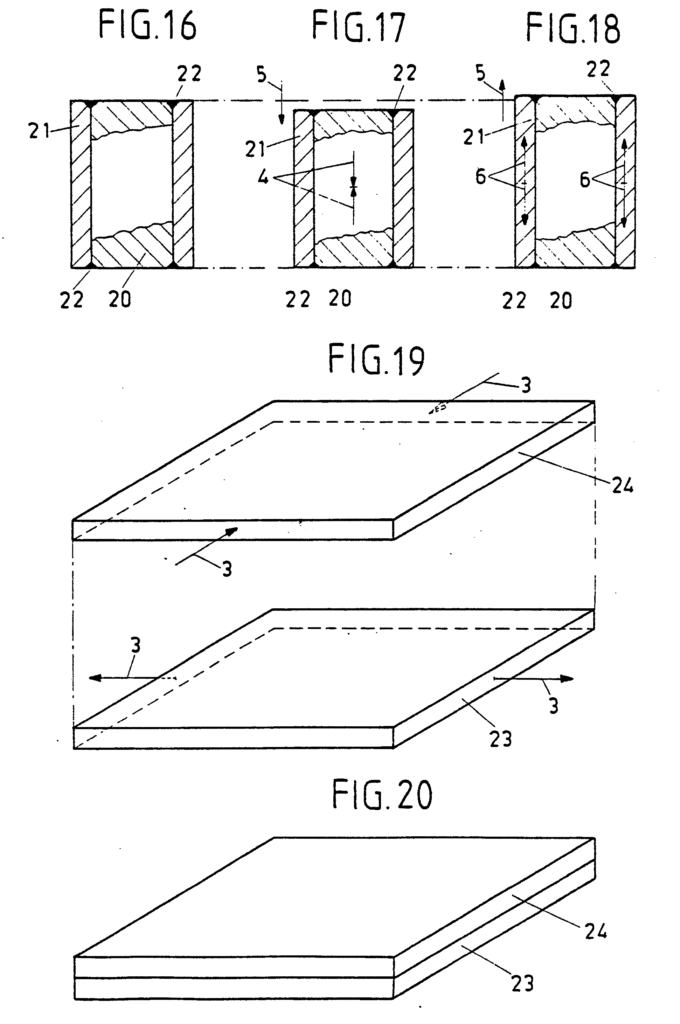

Fig. 16 stellt den Verbundwerkstoff gemäss Fig. 15 nach dem Zusammenfügen der einzelnen Teile in der Ausgangslage (Tieftemperaturbereich) dar. 22 ist die stirnseitige Schweissnaht, welche die feste Verbindung der einzelnen Teile gewährleistet. Die übrigen Bezugszeichen entsprechen denjenigen der Fig. 15.

In Fig. 17 ist der Verbundwerkstoff gemäss Fig. 16 während des Durchlaufens der Umwandlung im Hochtemperaturbereich der ersten Formgedächtnislegierung A dargestellt. 4 zeigt die Richtung der inneren Verformung von 20 in Temperaturbereich $A_S$ bis $A_F$ der Formgedächtnislegierung A, im vorliegenden Fall eine Kontraktion. 5 ist die Richtung der äusseren Bewegung. Die restlichen Bezugszeichen entsprechend denjenigen der Fig. 16.

In Fig. 18 ist der Verbundwerkstoff gemäss Fig. 16 während des Durchlaufens der Umwandlung im Hochtemperaturbereich der zweiten Formgedächtnislegierung B dargestellt. Der Doppelpfeil 6 deutet die innere Ausdehnung von 21, also die innere Verformung zwischen $A_S$ und $A_F$ an. 5 ist die entsprechende Bewegungsrichtung (Verlängerung). Die übrigen Bezugszeichen entsprechen denjenigen der Fig. 16.

Fig. 19 zeigt einen Verbundwerkstoff bestehend aus zwei Formgedächtnislegierungen in Blech- oder Plattenform für räumliche Biegung, nach Aufbringen der äusseren Belastung im Tieftemperaturbereich, im Zustand vor dem Zusammenfügen der einzelnen Teile. 23 ist die auf Zug beanspruchte Formgedächtnislegierung A, 24 die auf Druck beanspruchte Formgedächtnislegierung B. Zur Verwirklichung des Zustandes der letzteren ist im allgemeinen eine Pressvorrichtung notwendig, um das seitliche Ausknicken zu verhindern. Die Pfeile 3 deuten die Richtung der aufgedrückten Belastung an.

Fig. 20 stellt den Verbundwerkstoff gemäss Fig. 19 nach dem Zusammenfügen der einzelnen Teile in der Ausgangslage dar. Das Zusammenfügen muss auf der ganzen Berührungsfläche von 23 und 24 erfolgen und muss im Tieftemperaturbereich beider Formgedächtnislegierungen A und B durchgeführt werden. Dies kann z. B. mittels eines bei tiefer Temperatur aushärtenden Kunststoffbinders geschehen.

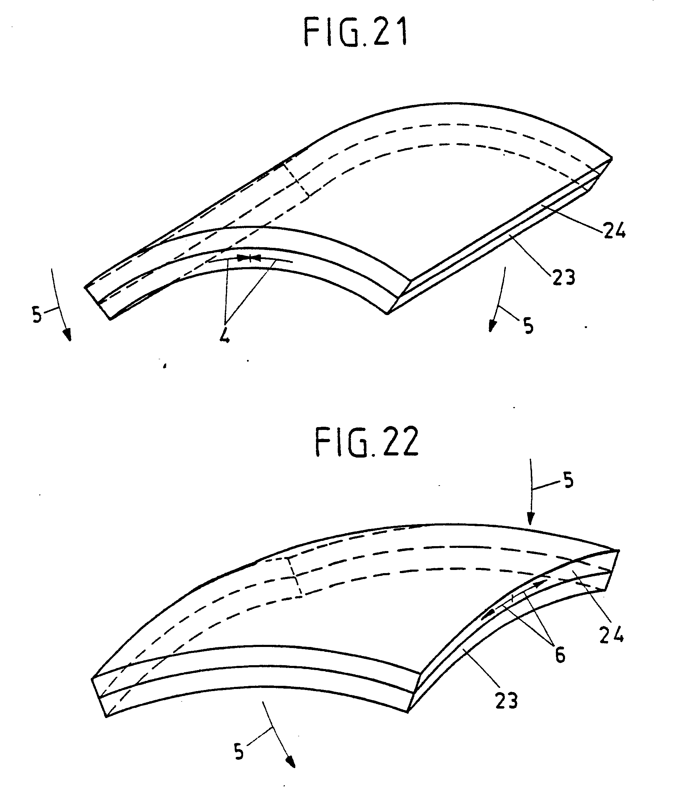

In Fig. 21 wird der Verbundwerkstoff gemäss Fig. 20 während des Durchlaufens der Umwandlung im Hochtemperaturbereich der ersten Formgedächtnislegierung A gezeigt. 23 zieht sich zusammen, was durch den Doppelpfeil 4 angedeutet ist. Durch diese innere Kontraktion krümmt sich der Werkstoff und seine äusseren Begrenzungsflächen an den Stirnseiten führen eine Bewegung gemäss Pfeilrichtung 5 aus. Der Werkstoff nimmt dadurch Gewölbeform an.

Fig. 22 zeigt den Werkstoff gemäss Fig. 20 während des Durchlaufens der Umwandlung im Hochtemperaturbereich der zweiten Formgedächtnislegierung B. Der Doppelpfeil 6 deutet die innere Ausdehnung von 24 zwischen den Temperaturgrenzen $A_S$ und $A_F$ an. Die Pfeile 5 markieren die entsprechende äussere Bewegung der Begrenzungsflächen. Der Werkstoff nimmt annähernd die Form einer Kuppel an. Die in Fig. 21 dargestellte Krümmung des Gewölbes wird dadurch teilweise wieder rückgängig gemacht, was seine Ursache im inneren mechanischen Gleichgewicht hat. Der Werkstoff wird wieder flacher, ist nun aber im Raume gekrümmt.

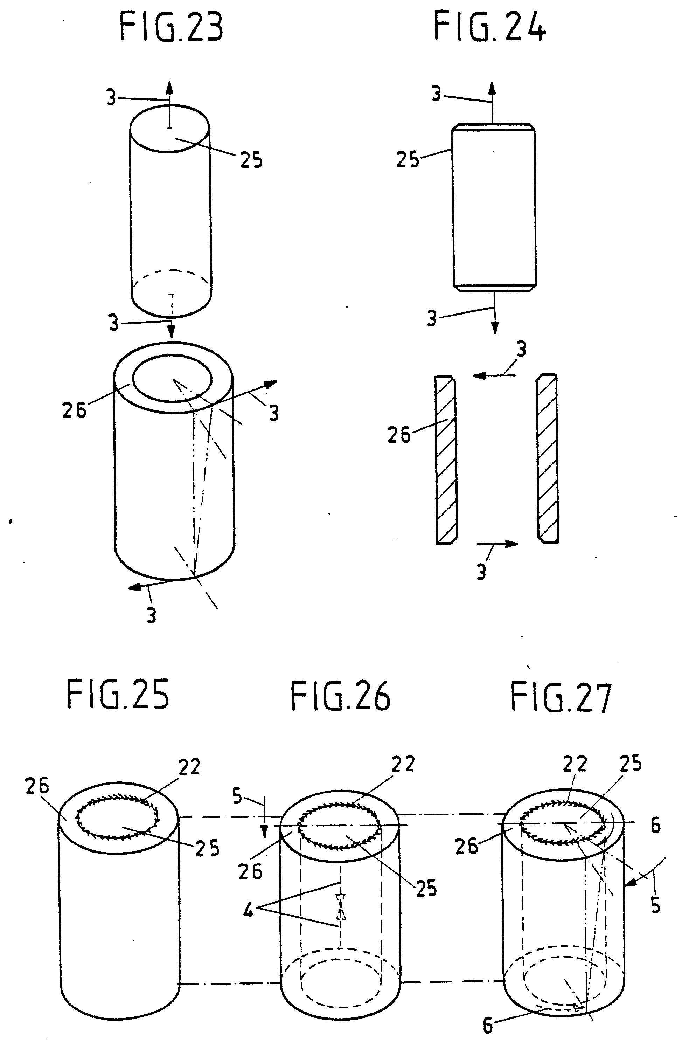

Fig. 23 zeigt einen Verbundwerkstoff bestehend aus zwei Formgedächtnislegierungen in Rundstabform für Zug/Torsions-Beanspruchung, nach Aufbringen der äusseren Belastung im Tieftemperaturbereich, im Zustand vor dem Zusammenfügen der einzelnen Teile in perspektivischer Darstellung. 25 ist eine Formgedächtnislegierung A in Zylinderform, 26 eine Formgedächtnislegierung B in Hohlzylinderform. 3 ist die Richtung der äusseren Belastung zur Erzielung der entsprechenden Verformung. Dabei wird 25 durch Zug gereckt, während 26 durch Torsion um einen gewissen Winkel verdrillt wird. Letzteres ist durch strichpunktierte Linien angedeutet.

Fig. 24 zeigt den Verbundwerkstoff gemäss Fig. 23 in Ansicht bzw. Schnitt. Zur Vorbereitung der Schweissnaht sind die entsprechenden Kanten von 25 und 26 gebrochen. Im übrigen entsprechen die Bezugszeichen denjenigen der Fig. 23.

In Fig. 25 ist der Verbundwerkstoff gemäss Fig. 23 nach dem Zusammenfügen der einzelnen Teile, in der Ausgangslage (Tieftemperaturbereich) dargestellt. 22 ist die stirnseitige Schweissnaht zur Gewährleistung der festen Verbindung der einzelnen Teile. Vergleiche Fig. 16. Die übrigen Bezugszeichen sind die gleichen wie in Fig. 23.

In Fig. 26 ist der Verbundwerkstoff gemäss Fig. 25 während des Durchlaufens der Umwandlung im Hochtemperaturbereich der ersten Formgedächtnislegierung A dargestellt. Die Richtung der inneren Verformung (Kontraktion) von 25 im Temperaturbereich zwischen $A_S$ und $A_F$ der Formgedächtnislegierung A ist durch den Doppelpfeil 4 angedeutet. 5 zeigt die Richtung der äusseren Bewegung (Verkürzung in Längsachse) an.

Fig. 27 zeigt den Verbundwerkstoff gemäss Fig. 25 während des Durchlaufens der Umwandlung im Hochtemperaturbereich der zweiten Formgedächtnislegierung B. Die in Umfangsrichtung verlaufenden Pfeile 6 deuten die innere Verformung von 26, im vorliegenden Fall ein Gleiten in Schubrichtung an. Die entsprechende äussere Bewegungsrichtung (Verdrillung) ist durch den Pfeil 5 markiert.

Beim vorliegenden Verbundwerkstoff sind grundsätzlich zwei Fälle zu unterscheiden, was sich auch in den entsprechenden Herstellungsverfahren widerspiegelt :

In allen Fällen, wo die Bewegungsart der einzelnen Teile des Verbundwerkstoffs gleich ist (z. B. nur Biegung, nur Zug, nur Druck, nur Torsion), kann der Werkstoff gewissermassen monolithisch sein. Er kann in praktisch jeder beliebigen Form (Stab, Band, Platte, Rohr) im Grundzustand hergestellt werden. Das Zusammenfügen der einzelnen Teile des Verbundwerkstoffs kann dann bei irgend einer Temperatur, vorteilhafterweise in warmem Zustand vor der Induzierung der Tieftemperaturphase zwecks Einstellung des Zweiweg-Effektes erfolgen. Dazu bieten sich Walzen (Walzplattieren), Pressen, Strangpressen, Schweissen, Löten, Diffusionsfügen oder pulvermetallurgische Methoden an. Ausserdem sind beliebige, mehr oder weniger kontinuierliche Uebergangszonen zwischen einzelnen Teilen ausführbar. Dies kann durch Diffusionsglühen oder bereits bei der pulvermetallurgischen Herstellung durch entsprechende Dosierung der verschiedenen Pulver erfolgen. Selbstverständlich kann das Zusammenfügen ausserdem durch Kleben im Tieftemperaturbereich der Formgedächtnislegierungen erfolgen.

In allen Fällen, wo die Bewegungsart der einzelnen Teile des Verbundwerkstoffs voneinander verschieden ist (z. B. Zug im einen, Druck oder Torsion im anderen Teil), muss die Behandlung zur Induzierung der den Zweiweg-Effekt ermöglichenden martensitischen Tieftemperaturphase individuell an jedem Teil des Werkstoffs vor dem Zusammenfügen gesondert vorgenommen werden. Dies bezieht sich insbesondere auf die im Tieftemperaturbereich durchzuführende entsprechende Verformung. Das Zusammenfügen muss dann ebenfalls im Tieftemperaturbereich erfolgen und kann lediglich durch Kleben oder lokales Schweissen (Punktschweissen, Verschweissen von Stirnseiten, Verschweissen mittels Endplatten etc.) vorgenommen werden. Es dürfte klar sein, dass ein bereits monolithischer Werkstoff (beispielsweise ein Rundstab) sich jedem gleichzeitigen Einbringen verschiedener Verformungsarten (etwa nur Zug im Kern, nur Torsion im Mantel) widersetzen würde.

Ausführungsbeispiel I :

Siehe Figuren 1 bis 4 !

Ein Verbundwerkstoff in Form eines prismatischen Biegestabes wurde wie folgt hergestellt :

Ein Streifen 1 von 2,5 mm Breite, 1,2 mm Dicke und 35 mm Länge aus einer Formgedächtnislegierung A wurde mit einem Streifen 2 der gleichen Abmessungen aus einer Formgedächtnislegierung B durch Warmwalzen (Walzplattieren) zu einem Biegestab von 2,5 mm Breite, 2,4 mm Höhe und 35 mm Länge verbunden. Die Formgedächtnislegierung A (Streifen 1) gehörte dem Ni/Ti-Typ an und hatte folgende Zusammensetzung :

| | |
|---|---|
| Ti = | 45,5 Gew.-% |
| Cu = | 10 Gew.-% |
| Ni = | Rest |

Die Umwandlungstemperaturen waren $A_S = 70\ °C$ und $A_F = 95\ °C$. Die Formgedächtnislegierung B (Streifen 2) gehörte dem β-Messingtyp an und hatte folgende Zusammensetzung :

| | |
|---|---|
| Al = | 14,4 Gew.-% |
| Ni = | 3,2 Gew.-% |
| Cu = | Rest |

Die Umwandlungstemperaturen betrugen $A_S = 120\ °C$ und $A_F = 150\ °C$. Der Verbundwerkstoff wurde während 1/2 h bei 850 °C einer Lösungsglühung unterworfen und daraufhin in Eiswasser abgeschreckt. Zur Einstellung des Formgedächtniseffekts wurde nun der Werkstoff im Tieftemperaturbereich (martensitische Phase) durch Biegung um 7,5 %, bezogen auf die innenliegende Faser verformt, so dass er ungefähr die Gestalt der Fig. 2 annahm. Unter Beibehaltung der durch die Pfeile 3 angedeuteten Belastung wurde der Werkstoff während 1/2 h bei 300 °C geglüht und daraufhin auf Raumtemperatur abgekühlt. Dadurch war der Zustand zur Ermöglichung des reversiblen Zweiweg-Effektes in beiden Teilen 1 und 2 des gekrümmten Biegestabes erreicht. Bei Erwärmung des Biegestabes in den Temperaturbereich von 70 bis 95 °C konnte der Formgedächtniseffekt an der Ausdehnung des Streifens 1 festgestellt werden. Der Werkstoff nahm die Form der Fig. 3 an. Bei weiterer Erwärmung auf über 120 °C streckte sich der Biegestab noch mehr und nahm schliesslich die flache Form gemäss Fig. 4 an. Nach Abkühlung auf Raumtemperatur konnte eine vollständige Rückkehr des Biegestabes in die Ausgangslage festgestellt werden. Wiederholte Temperaturzyklen zeigten eine vollkommene Reproduzierbarkeit des Effektes.

Ausführungsbeispiel II :

Siehe Fig. 12 !
Ein Verbundwerkstoff in Form eines runden Zugstabes wurde wie folgt hergestellt :
Ein zylindrischer Stab 16 von 10 mm Durchmesser aus einer Formgedächtnislegierung A wurde in ein hohlzylindrisches Rohr 17 mit 14 mm Aussen- und 10 mm Innendurchmesser aus einer Formgedächtnislegierung 13 eingeschoben und das Ganze in warmem Zustand in den Rezipienten einer Strangpresse eingesetzt. Die Matrize hatte eine kreisförmige Oeffnung von 7 mm Durchmesser. Bei einer Temperatur von 850 °C und einem Reduktionsverhältnis von 1 : 4 wurde ein Verbundwerkstoff in Form eines Rundstabes von 7 mm Durchmesser hergestellt. Die Formgedächtnislegierungen A und B entsprachen in ihren Zusammensetzungen und Eigenschaften genau derjenigen des Beispiels I. Der Zugstab wurde während 1/2 h bei 850 °C lösungsgeglüht und daraufhin in Eiswasser abgeschreckt. Nun wurde der Werkstoff durch eine aussen in der Längsachse aufgebrachte Zugbelastung bei einer Temperatur von 0 °C um 7,5 % gereckt und unter Beibehaltung der Belastung während 1/2 h bei 300 °C geglüht. Nach Abkühlung und Entlastung war der Werkstoff für den Formgedächtniseffekt einsatzfähig. Sein Ablauf — diesmal eine Längenänderung in der Längsrichtung — konnte in analoger Weise wie im Falle des Beispiels I beobachtet werden. Bei Erwärmung verkürzte sich der Zugstab stufenweise, während er sich bei Abkühlung ebenso wieder ausdehnte.

Ausführungsbeispiel III :

Siehe Fig. 11 !
Ein Verbundwerkstoff in Form eines runden Biegestabes wurde wie folgt hergestellt :
Es wurde eine pulvermetallurgische Methode angewendet. In einen steifen Gummischlauch von 20 mm Innendurchmesser wurde konzentrisch ein dünnwandiges Kupferrohr von 15 mm Aussendurchmesser und 0,15 mm Wandstärke gestellt. In das Kupferrohr wurde eine Pulvermischung aus einer Formgedächtnislegierung A eingefüllt, während der Zwischenraum zwischen dem Kupferrohr und dem Gummischlauch mit einer Pulvermischung aus einer Formgedächtnislegierung 13 aufgefüllt wurde. Beide Formgedächtnislegierungen gehörten dem β-Messingtyp an. Die Legierung A hatte folgende Zusammensetzung und Umwandlungstemperaturen :

| | |
|---|---|
| Al = | 14,7 Gew.-% |
| Ni = | 3,2 Gew.-% |
| Cu = | 82,1 Gew.-% |
| $A_S$ = | 100 °C |
| $A_F$ = | 130 °C |

Die Legierung B hatte folgende Zusammensetzung und Umwandlungstemperaturen :

| | |
|---|---|
| Al = | 14,2 Gew.-% |
| Ni = | 3,2 Gew.-% |
| Cu = | 82,6 Gew.-% |
| $A_S$ = | 150 °C |
| $A_F$ = | 180 °C |

· Die im Gummischlauch befindliche Pulverfüllung wurde durch kaltisostatisches Pressen in einen vorverdichteten Rohling übergeführt, der nach Entfernen des Gummischlauches zweimal hintereinander im Argonstrom gesintert wurde. Der auf diese Weise hergestellte Sinterkörper wurde in einen Mantel (Kapsel) aus Stahl gehüllt und bei einer Temperatur von 850 °C durch Rundhämmern vollständig verdichtet. Anschliessend wurde der Stahlmantel durch Ueberdrehen des Rundstabes entfernt. Der nun aus dem Zylinder 14 (Legierung A) und dem Hohlzylinder 15 (Legierung B) bestehende, als Rundstab vorliegende Verbundwerkstoff wurde während 1/2 h bei 850 °C geglüht und in Eiswasser abgeschreckt. Hierauf wurde der Rundstab bei Raumtemperatur gebogen, so dass seine Verformung bezogen auf die innenliegende Faser 6,5 % betrug. Unter Beibehaltung der Belastung wurde dann der gekrümmte Stab während 1/2 h bei einer Temperatur von 300 °C geglüht, entlastet und abgekühlt. Beim Durchlaufen eines Temperaturzyklus zwischen Raumtemperatur und ca. 200 °C konnte im oben angegebenen Temperaturbereich ein stufenweiser reversibler Zweiweg-Effekt ähnlich Beispiel I festgestellt werden.

Ausführungsbeispiel IV :

Siehe Figuren 23 bis 27 !
· Ein Verbundwerkstoff in Form eines Zug/Torsioins-Stabes wurde wie folgt hergestellt :
Ein zylindrischer Stab 25 von 8 mm Durchmesser aus einer Formgedächtnislegierung A wurde während 15 min bei einer Temperatur von 850 °C geglüht, in Eiswasser abgeschreckt und bei Raumtemperatur durch äussere Belastung auf Zug um 6,5 % gereckt. Unter Beibehaltung der axialen Zugbelastung wurde der Stab während 1/2 h bei 270 °C geglüht, entlastet und abgekühlt. Die Formgedächtnislegierung A hatte folgende Zusammensetzung und Eigenschaften :

| | |
|---|---|
| Al = | 14,5 Gew.-% |
| Ni = | 3,2 Gew.-% |
| Cu = | Rest |
| $A_S$ = | 100 °C |
| $A_F$ = | 130 °C |

Ein hohlzylindrischer Körper 26 von 12 mm Aussen- und 8 mm Innendurchmesser aus einer Formgedächtnislegierung B wurde während 1/2 h bei einer Temperatur von 850 °C geglüht, in Wasser abgeschreckt und im Tieftemperaturbereich durch äussere Schubbelastung verdrillt, so dass die Verformung einer Dehnung an der äusseren Oberfläche von 8 % entsprach. Die Formgedächtnislegierung B hatte folgende Zusammensetzung und Eigenschaften :

| | |
|---|---|
| Ti = | 45,5 Gew.-% |
| Cu = | 10 Gew.-% |
| Ni = | Rest |
| $A_S$ = | 70 °C |
| $A_F$ = | 95 °C |

Am Stab 25 wurden die stirnseitigen Kanten und am Körper 26 die stirnseitigen, innenliegenden Kanten gebrochen. Dann wurde der Stab 25 in den Körper 26 eingesetzt und stirnseitig verschweisst : Schweissnaht 22. Dabei wurde die Masse des Werkstoffs dauernd gekühlt, damit die Erwärmungszonen beim Schweissen klein gehalten wurden. Beim Durchlaufen eines Temperaturzyklus konnte der stufenweise Zweiweg-Effekt beobachtet werden : Zunächst setzte bei Erwärmung eine Verdrillung (Fig. 27) ein, die bei weiterer Erwärmung von einer Verkürzung (Fig. 26) überlagert wurde. Umgekehrte Reihenfolge wie in den Figuren dargestellt !

Die Erfindung ist nicht auf die obigen Ausführungsbeispiele beschränkt. Aus den Figuren 1 bis 27 und deren möglichen Kombinationen resultieren weitere zahlreiche Ausführungsvarianten (Vergleiche auch Figurenbeschreibung).

Der Verbundwerkstoff muss nicht notwendigerweise aus zwei Formgedächtnislegierungen mit unterschiedlichen Umwandlungstemperaturen bestehen. Er kann ebensogut aus mehreren Teilen (mindestens deren zwei) aus ein und derselben Legierung bestehen, wobei jedoch jeder einzelne Teil für sich einen individuellen, vom anderen verschiedenen Bewegungsmodus repräsentiert. Andererseits ist der Verbundwerkstoff nicht auf nur zwei Formgedächtnislegierungen oder auf nur zwei Teile begrenzt. Grundsätzlich kann er aus beliebig vielen Formgedächtnislegierungen und aus beliebig vielen Teilen bestehen. Dadurch lassen sich praktisch unbegrenzte Bewegungsgrössen in Funktion der Temperatur zusammenstellen ; aus Bewegungen im Raume sind möglich. Es lassen sich praktisch alle Bewegungsarten wie Längenänderungen durch Zug, Druck, sodann Biegung und Verdrillung miteinander kombinieren.

Bevorzugte Ausführungen von Verbundwerkstoffen sind solche, welche aus einem Teil aus einer Formgedächtnislegierung des Typs Ni/Ti/Cu mit Umwandlungstemperaturen $A_S$ im Bereich von 50 bis 70 °C und aus einem anderen Teil aus einer Formgedächtnislegierung des Typs Cu/Al/Ni mit Umwandlungstemperaturen $A_S$ im Bereich von 100 bis 120 °C bestehen.

**Patentansprüche**

1. Verwendung eines Werkstücks aus einem Verbundwerkstoff in Stab-, Rohr-, Band-, Blech- oder Plattenform mit reversiblen thermo-mechanischen Eigenschaften, dadurch gekennzeichnet, dass mindestens zwei fest zusammengefügte Teile vorhanden sind, wobei der Einsatztemperaturbereich derart gewählt ist, dass jeder Teil für sich einen Gedächtniseffekt aufweist, und dass mindestens ein Teil aus einer einen Zweiweg-Effekt zeigenden Formgedächtnislegierung besteht.

2. Verwendung nach Anspruch 1, dadurch gekennzeichnet, dass die einzelnen Teile unterschiedliche Umwandlungstemperaturen besitzen.

3. Verwendung nach Anspruch 1, dadurch gekennzeichnet, dass mindestens zwei Teile gleiche Umwandlungstemperaturen besitzen.

4. Verwendung nach Anspruch 1, dadurch gekennzeichnet, dass die einzelnen Teile unterschiedliche Verformungsarten und -Werte aufweisen und unter sich zu verschiedenartigen Bewegungen befähigt sind.

5. Verwendung nach Anspruch 1, dadurch gekennzeichnet, dass das Werkstück ein Biegestab bestehend aus zwei in der Längsrichtung miteinander verbundenen Teilen aus je einer Formgedächtnislegierung (1, 2) ist.

6. Verwendung nach Anspruch 5, dadurch gekennzeichnet, dass der Biegestab einen flachen, querliegenden oder hochkant gestellten oder trapezförmigen oder kreisförmigen Querschnitt aufweist.

7. Verwendung nach Anspruch 1, dadurch gekennzeichnet, dass das Werkstück ein Biegestab bestehend aus mehr als zwei in der Längsrichtung miteinander verbundenen Teilen aus je einer Formgedächtnislegierung (1, 11, 13) ist.

8. Verwendung nach Anspruch 1, dadurch gekennzeichnet, dass das Werkstück ein Zugstab oder ein Druckstab bestehend aus zwei in der Längsrichtung miteinander verbundenen Teilen aus je einer Formgedächtnislegierung (16, 17 ; 18, 19) ist.

9. Verwendung nach Anspruch 1, dadurch gekennzeichnet, dass das Werkstück ein Zug/Druck-Stab bestehend aus zwei an den Stirnseiten miteinander verbundenen Teilen aus je einer Formgedächtnislegierung (20, 21) ist.

10. Verwendung nach Anspruch 1, dadurch gekennzeichnet, dass das Werkstück ein Blech oder ein Platte bestehend aus zwei über ihre ganze Fläche miteinander verbundenen schichtförmigen Teilen aus je einer Formgedächtnislegierung (23, 24) ist.

11. Verwendung nach Anspruch 1, dadurch gekennzeichnet, dass das Werkstück ein Zug/Torsions-Stab bestehend aus zwei an den Stirnseiten miteinander verbundenen Teilen aus je einer Formgedächtnislegierung (25, 26) ist.

12. Verwendung nach Anspruch 1, dadurch gekennzeichnet, dass der eine Teil des Werkstücks aus einer Formgedächtnislegierung des Typs Ni/Ti/Cu mit einer vergleichsweise niedrigen Umwandlungstemperatur $A_S$ im Bereich von 50 bis 70 °C und mindestens ein weiterer Teil aus einer Formgedächtnislegierung des Typ Cu/Al/Ni mit einer vergleichsweise höheren Umwandlungstemperatur $A_S$ im Bereich von 100 bis 200 °C besteht.

13. Verfahren nach Anspruch 1, dadurch gekennzeichnet, dass die einzelnen Teile des Werkstücks, welche unterschiedliche Umwandlungstemperaturen aufweisen, zunächst durch Walzen, Schweissen, Fügen oder Löten oder auf pulvermetallurgische Art und Weise zu einem Verbundkörper zusammengefügt und letzterer nachträglich zwecks Induzierung des Zweiweg-Effekts gesamthaft einer thermischen Behandlung und einer mechanischen Verformung im Tieftemperaturbereich unterworfen wird.

14. Verfahren nach Anspruch 1, dadurch gekennzeichnet, dass die einzelnen Teile des Werkstücks zwecks Induzierung des Zweiweg-Effekts zunächst je einer individuellen thermischen Behandlung und einer individuellen mechanischen Verformung im Tieftemperaturbereich unterworfen werden, derart, dass die einzelnen Teile unterschiedliche Verformungsarten und/oder Verformungsgrade erleiden, und dass die einzelnen Teile nachträglich durch Kleben oder lokales Verschweissen zu einem Verbundkörper zusammengefügt werden.

## Claims

1. Use of a workpiece consisting of a composite in the form of a rod, tube, belt, sheet or panel, having reversible thermomechanical properties, characterized in that at least two firmly combined parts are present, the temperature range for use being chosen so that each part in itself has a memory effect and at least one part consists of a shape memory alloy exhibiting a two-way effect.

2. Use according to Claim 1, characterized in that the individual parts have different transition temperatures.

3. Use according to Claim 1, characterized in that at least two parts have the same transition temperatures.

4. Use according to Claim 1, characterized in that the individual parts have different modes of deformation and deformation values and between them are capable of different types of movements.

5. Use according to Claim 1, characterized in that the workpiece is a bending rod consisting of two parts connected to one another in the longitudinal direction, each part being composed of a shape memory alloy (1, 2).

6. Use according to Claim 5, characterized in that the bending rod has a flat, transverse or upended cross-section or a trapezoidal or circular cross-section.

7. Use according to Claim 1, characterized in that the workpiece is a bending rod consisting of more than two parts connected to one another in the longitudinal direction, each part being composed of a shape memory alloy (1, 11, 13).

8. Use according to Claim 1, characterized in that the workpiece is a tension rod or a thrust rod consisting of two parts connected to one another in the longitudinal direction, each part being composed of a shape memory alloy (16, 17; 18, 19).

9. Use according to Claim 1, characterized in that the workpiece is a tension/thrust rod consisting of two parts connected to one another at the end faces, each part being composed of a shape memory alloy (20, 21).

10. Use according to Claim 1, characterized in that the workpiece is a sheet or a panel consisting of two layer-like parts connected to one another over their entire area, each part being composed of a shape memory alloy (23, 24).

11. Use according to Claim 1, characterized in that the workpiece is a tension/torsion rod consisting of two parts connected to one another at the end faces, each part being composed of a shape memory alloy (25, 26).

12. Use according to Claim 1, characterized in that one of the parts of the workpiece consists of a shape memory alloy of the type Ni/Ti/Cu, having a comparatively low transition temperature $A_S$ in the range from 50 to 70 °C, and at least one further part consists of a shape memory alloy of the type Cu/Al/Ni, having a comparatively high transition temperature $A_S$ in the range from 100 to 200 °C.

13. Process according to Claim 1, characterized in that the individual parts of the workpiece, which have different transition temperatures, are first combined by rolling, welding, joining or soldering or by a powder metallurgical method to give a composite, and the latter, in its entirety, is subsequently subjected to a thermal treatment and mechanical deformation in the low temperature range in order to induce the two-way effect.

14. Process according to Claim 1, characterized in that, in order to induce the two-way effect, the individual parts of the workpiece are each first subjected to an individual thermal treatment and individual mechanical deformation in the low temperature range in a manner such that the individual parts experience different types of deformation and/or degrees of deformation, and that the individual parts are subsequently joined by adhesive bonding or localized welding to give a composite.

## Revendications

1. Utilisation d'un élément en un matériau composite sous la forme d'une barre, d'un tube, d'une bande, d'une tôle ou d'une plaque avec des propriétés thermo-mécaniques réversibles, caractérisée en ce qu'il y a au moins deux pièces solidement assemblées, dans laquelle le domaine de température d'utilisation est choisi de telle façon que chaque pièce présente en soi un effet de mémoire, et en ce qu'au moins une pièce se compose d'un alliage à mémoire de forme présentant un effet à deux voies.

2. Utilisation suivant la revendication 1, caractérisée en ce que les diverses pièces présentent des températures de transformation différentes.

3. Utilisation suivant la revendication 1, caractérisée en ce qu'au moins deux pièces présentent les mêmes températures de transformation.

4. Utilisation suivant la revendication 1, caractérisée en ce que les différentes pièces présentent des types et des valeurs de déformation différentes et sont en mesure d'effectuer des mouvements de nature différente en soi.

5. Utilisation suivant la revendication 1, caractérisée en ce que l'élément est un barreau de flexion se composant de deux pièces assemblées l'une à l'autre en direction longitudinale, chacune étant en un alliage à mémoire de forme (1, 2).

6. Utilisation suivant la revendication 5, caractérisée en ce que le barreau de flexion présente une section transversale plate, posée à plat ou sur chant, ou trapézoïdale ou circulaire.

7. Utilisation suivant la revendication 1, caractérisée en ce que l'élément est un barreau de flexion se composant de plus de deux pièces assemblées l'une à l'autre en direction longitudinale, chacune étant en un alliage à mémoire de forme (1, 11, 13).

8. Utilisation suivant la revendication 1, caractérisée en ce que l'élément est un barreau de traction ou un barreau de compression se composant de deux pièces assemblées l'une à l'autre, chacune étant en un alliage à mémoire de forme (16, 17 ; 18, 19).

9. Utilisation suivant la revendication 1, caractérisée en ce que l'élément est un barreau de traction/compression se composant de deux pièces assemblées en tête l'une à l'autre, chacune étant en un alliage à mémoire de forme (20, 21).

10. Utilisation suivant la revendication 1, caractérisée en ce que l'élément est une tôle ou une plaque se composant de deux pièces plates assemblées l'une à l'autre par toute leur surface, chacune étant en un alliage à mémoire de forme (23, 24).

11. Utilisation suivant la revendication 1, caractérisée en ce que l'élément est une barre de traction/torsion se composant de deux pièces assemblées en tête l'une à l'autre, chacune étant en un alliage à mémoire de forme (25, 26).

12. Utilisation suivant la revendication 1, caractérisée en ce que la première pièce de l'élément est constituée d'un alliage à mémoire de forme du type Ni/Ti/Cu ayant une température de transformation $A_S$ relativement basse comprise entre 50 °C et 70 °C et au moins une autre pièce de l'élément est constituée d'un alliage à mémoire de forme du type Cu/Al/Ni ayant une température de transformation $A_S$ relativement élevée comprise entre 100 °C et 200 °C.

13. Procédé suivant la revendication 1, caractérisé en ce que les différentes pièces de l'élément, qui présentent des températures de transformation différentes, sont d'abord assemblées par laminage, soudage, jonction ou brasage ou par les méthodes de la métallurgie des poudres, en un corps composite, et en ce que ce dernier est ensuite soumis au total à un traitement thermique et à une déformation mécanique dans le domaine des basses températures afin d'instaurer l'effet à deux voies.

14. Procédé suivant la revendication 1, caractérisé en ce que les différentes pièces de l'élément sont soumises d'abord chacune à un traitement thermique individuel et à une déformation mécanique individuelle dans le domaine des basses températures afin d'instaurer l'effet à deux voies, de telle sorte que les différentes pièces subissent des types et/ou des degrés de déformation différents, et en ce que les différentes pièces sont ensuite assemblées en un corps composite par collage ou par soudage local.

# FIG.1

# FIG.2

# FIG.3

# FIG.4

# FIG.5

# FIG.6

# FIG.7

# FIG.8

# FIG.9

# FIG.10

# FIG.11

FIG.12

FIG.13

FIG.14

FIG.15

4

# FIG.16    FIG.17    FIG.18

# FIG.19

# FIG.20

# FIG.21

# FIG.22

# FIG.23

# FIG.24

# FIG.25

# FIG.26

# FIG.27